# EUROPEAN PATENT APPLICATION

(11) **EP 3 883 174 A1**
(43) Date of publication of application: **22.09.2021**
(21) Application number: 20164594.2
(22) Date of filing: 20.03.2020
(51) Int. Cl.: H04L 9/00, H04L 9/30

(54) **METHOD FOR SECURELY PERFORMING A PUBLIC KEY ALGORITHM**

(71) Applicant: THALES DIS FRANCE SA, 92190 Meudon (FR)
(72) Inventor: JELJELI, Hamza, 92190 Meudon (FR)
(74) Representative: Bricks, Amélie

(57) **Abstract**

The present invention relates to a method for securely performing a public key algorithm comprising cryptographic computations using a private key,
said method being performed by a system comprising a client device and a server device and comprising the steps of :
-selecting (S1), by said server device, a set of mutually coprime integers (p₁,... ,pₙ) as a base of a Residue Number System (RNS-base B), with n an integer,
-computing (S2), by said server device, a RNS representation of said private key, said RNS representation of an integer x in [0, P-1], with P the product of every elements of the base, being the list (x₁, ...xₙ) with xᵢ = x mod pᵢ, i being an integer in [1,n],
-sending (S3), by said server device, the computed RNS representation to the client device,
-performing (S4), by said client device, the cryptographic computations of the public key algorithm in said RNS base using said sent RNS representation .

## Description

### FIELD OF THE INVENTION

The present invention relates to the field of whitebox cryptography and more particularly to a method enabling to perform cryptographic operations using a private key without disclosing said private key to an attacker in a whitebox context.

### BACKGROUND OF THE INVENTION

A first application of cryptography is to provide mechanisms to protect data, such as messages exchanged on a communication channel, from being accessed by an unauthorized user. A plaintext piece of data may be protected by converting it into a ciphertext that may only be deciphered, i.e., converted back into the original data by someone or some device owning a secret key required for performing the deciphering operation.

Two major categories of cryptography are secret key cryptography and private-key-public-key cryptography (herein, simply referred to as public key cryptography). In public key cryptography, the recipient of a ciphertext message, i.e., the decrypting party, has a private key or secret key required to decipher ciphertext messages encrypted with the public key. In other words, there is an association between a particular private key and a particular public key; they form a key pair. The public key is made available to anyone who wishes to send an encrypted message (a ciphertext message) whereas the corresponding secret key is kept secret by the intended recipient of messages.

Public key cryptography can also be used for authenticating the issuer of a message. Such an issuer can generate a signature based on said message using his private key. The recipient of the message can then use the public key of the alleged issuer for verifying that the signature was generated using the associated private key ie that the issuer of the message is indeed who he claims to be. An example of widely used public key cryptosystem is Rivest-Shamir-Adelson (RSA) cryptosystem. Such a cryptosystem is based on the practical difficulty of factoring the product of two large prime numbers and uses a public key (e, N) and a private key d such that e.d = 1 modulo phi(N), with N, d and e integers and phi() Euler's totient function. RSA cryptosystem allows publicly sharing the public key (e, N) for producing ciphertexts while enabling that only someone with knowledge of the private key d can decipher such ciphertexts and get knowledge of the private data enciphered in it. The private key can also be used to generate a signature for a message. Such a signature can then be verified by anyone using the associated public key. Of course the private key d must remain secret, otherwise any attacker having knowledge of the secret key could decipher ciphertext ciphered with the public key, and the privacy of enciphered data would not be guaranted anymore. Such an attacker could also generate forged signatures of a message as if he was the true owner of the private key.

Traditionally, in order to ensure that the secret key remains secret, the decryption or signature algorithm is supposed to be executed in a secure environment only. The device executing such an algorithm is assumed trusted, preventing any attacker trying to decipher a secret message from accessing. This is referred to as black box cryptography.

However, cryptographic processes are more and more deployed in applications executed on open devices. For example many user devices now have access to the Internet, such as PCs, tablets, smartphones, and can be used for playing copyrighted digital content such as audio or video files. Such files may be cryptographically protected, for example using digital rights management (DRM) files, in order to make it available to a user only as long as the user as subscribed to an online multimedia streaming service.

Cryptographic processes are then executed in an environment where not all users or devices can be trusted. Such a context is usually called a white-box attack context. In such a context, cryptosystems sensitive data such as private keys, are vulnerable to attacks since the attacker has full access to the software implementation of the cryptographic processes. Binary code of such processes is completely accessible and editable by the attacker that can analyze the binary code of the cryptography application and, for example, memory pages or registers used for temporary storage during the execution. Such manipulation may, for example, be performed using debuggers and hardware emulation tools.

Software implementations of cryptosystems able to resist white-box attacks have been sought. In such implementations the private key may be provided on the subscriber's cryptography device, e.g., a mobile device such as a mobile telephone, in a manner that it can be used by the device to decrypt or generate a signature without revealing either the key or the algorithm to the subscriber. The key might be hidden in some way inside the code implementing the decryption/signature algorithm and the algorithm may be obfuscated so that it is very difficult to determine where the key is hidden. The key's value might be also protected so that it is very difficult to determine it. This is referred to as white-box cryptography.

In order to be fully secure, whitebox implementations of cryptographic algorithms should also be resistant to Side Channel attacks or Fault attacks that could enable an attacker to gain knowledge of the private key of a cryptographic algorithm by monitoring the power consumption of the device executing it, or by injecting faults during the execution of the cryptographic algorithm. Countermeasures against such attacks exist, but are usually quite expensive and may require to keep secret part of the implementation details of the algorithm.

Therefore, there is a need for a software implementation, and an associated cryptographic device, of a cryptographic algorithm, enabling to securely execute it in a white-box environment while being protected against side-channel analysis, and achieving a computation time enabling practical application.

### SUMMARY OF THE INVENTION

For this purpose and according to a first aspect, this invention therefore relates to a method for securely performing a public key algorithm comprising cryptographic computations using a private key, said method being performed by a system comprising a client device and a server device and comprising the steps of :
- selecting, by said server device, a set of mutually coprime integers (p1,...,pn) as a base of a Residue Number System (RNS-base B), with n an integer,
- computing, by said server device, a RNS representation of said private key, said RNS representation of an integer x in [0, P-1], with P the product of every elements of the base, being the list (x₁, ...xₙ) with xᵢ = x mod pᵢ, i being an integer in [1,n],
- sending, by said server device, the computed RNS representation to the client device,
- performing, by said client device, the cryptographic computations of the public key algorithm in said RNS base using said sent RNS representation .

By doing so, the private key clear value is never exposed during the execution of the cryptographic computations by the client device and no attacker can retrieve it, even by side channel analysis.

Said client device may perform additionnal countermeasures against side-channel and fault attacks to be applied to said public key algorithm.

Said public key algorithm may be among : RSA encryption and signature schemes, ECDSA (Elliptic Curve Digital Signature Algorithm) signature scheme, EIGamal encryption and signature schemes.

Said cryptographic computations performed by said client device may be among: addition, multiplication, modular addition/multiplication, inversion, Montgomery multiplication.

In an embodiment, said cryptographic computations performed by said client device are arithmetic operations to be executed by said public key algorithm.

In such an embodiment, the step of performing, by said client device, the arithmetic operations of the public key algorithm may comprise a randomization of inputs and/or outputs of said arithmetic operations.

Such a randomization adds an additional countermeasure against side-channel analysis.

In such an embodiment, the step of performing, by said client device, the arithmetic operations of the public key algorithm may comprise a detection of Fault attacks.

Said arithmetic operations of the public key algorithm in said RNS base may be performed separately along each vector of said base in a random order.

It makes it even more difficult for an attacker to perform side-channel analysis if the order in which an operation is applied to the components of the RNS representation changes from one execution to another.

RNS representations of inputs of said cryptographic computations may be computed and the cryptographic computations of the public key algorithm in said RNS base may be performed using said RNS representations of their inputs.

In a first embodiment, said RNS representations of inputs of said cryptographic computations may be computed by the server device and transmitted to the client device.

In a second embodiment, said RNS representations of inputs of said cryptographic computations are computed by the client device using secure techniques configured for performing a reduction modulo an integer without revealing said integer.

By doing so, the client device may use the RNS representations of the operands for performing the cryptographic computations without having knowledge of the RNS base itself, which prevents an attacker from retrieving the RNS base and then the private key.

According to a second aspect, this invention relates to a computer program product directly loadable into the memory of at least one computer, comprising software code instructions for performing the steps of the method according to the first aspect, when said product is run on the computer.

According to a third aspect, this invention relates to a system comprising a client device and a server device comprising each one a processor and an interface configured to perform the method according to the first aspect.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a system according to an embodiment of the present invention;
- Figure 2 is a schematic illustration of a client device according to an embodiment of the present invention;

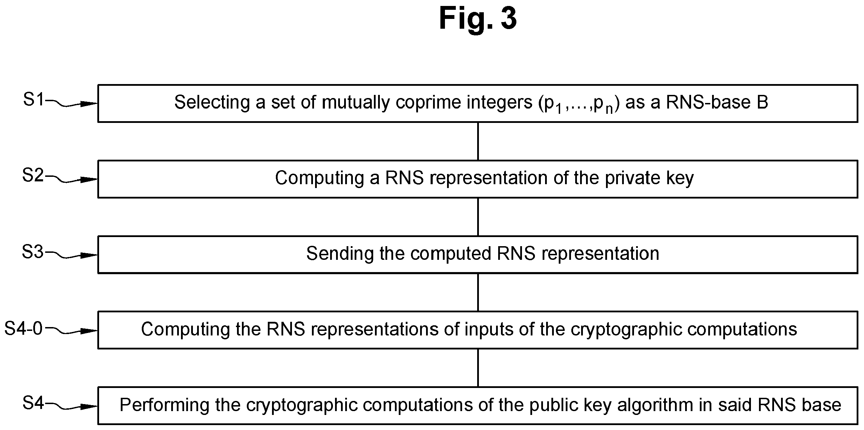

- Figure 3 illustrates schematically a method enabling to perform cryptographic operations using a private key without disclosing said private key to an attacker in a whitebox context according to an embodiment of the present invention.

### DETAILED DESCRIPTION OF EMBODIMENTS OF THE INVENTION

The invention aims at providing a method enabling a client device to perform cryptographic computations of a public key algorithm using a corresponding private key in such a way that the execution of the algorithm does not disclose the secret key in a white box context and that it is protected against side channel analysis. Such a public key algorithm may for example be among RSA encryption and signature schemes, ECDSA (Elliptic Curve Digital Signature Algorithm) signature scheme or EIGamal encryption and signature schemes ; and the cryptographic computations performed by the client device may be arithmetic operations to be executed by such a public key algorithm. Such cryptographic computations performed by said client device may for example include addition, multiplication, modular addition/multiplication, inversion, Montgomery multiplication.

The main idea of the invention is to apply to the secret key prior to the execution of the cryptographic computations a transformation into a Residue Number System. Indeed, after choosing a set of n mutually coprime integers (p₁,...,pₙ) as a base of the RNS, any integer may be defined by its residues obtained after modular reductions by each of the vectors of the base : x in [0, P-1], with P the product of every elements of the base, may be expressed as the list (x₁, ...xₙ) with xᵢ = x mod pᵢ for any integer i in [1 ,n].

After such a transformation of the private key has been performed, many operations of cryptographic computations may be performed easily along each vector of the base instead of using the operands of the operations as whole numbers. Even if an attacker would be able to recover the value of the secret key expressed in the RNS base, either directly in a white box context, or by side-channel analysis, such a value would be useless as long as the attacker is no knowledge of the RNS base in which the key is expressed. In order to keep such a base hidden in a white box context, the transformation of the secret key may be performed by a distant server device, considered as secure, before the secret key is transmitted to the client device.

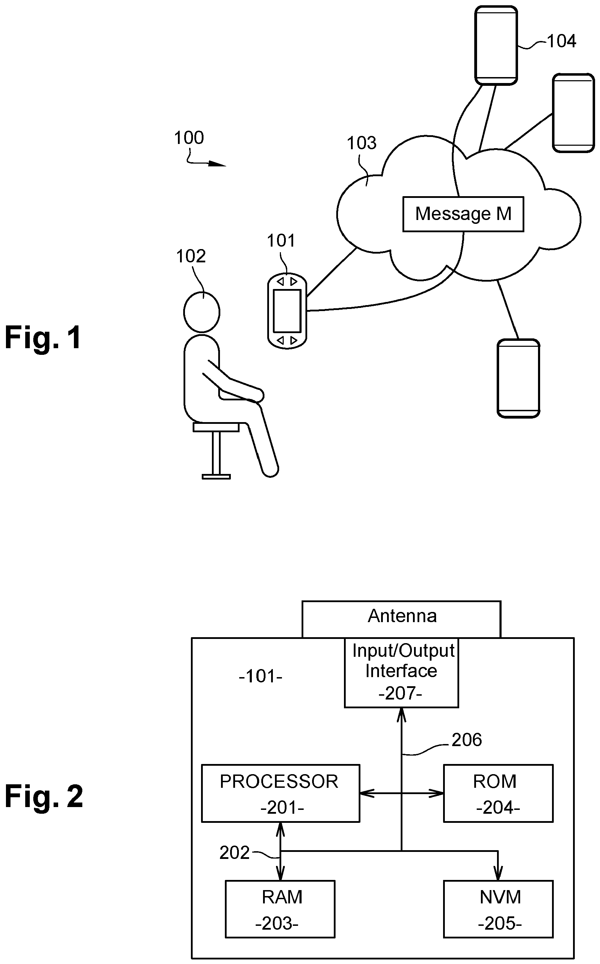

As illustrated on **Figure 1**, the method according to the invention is performed by a system 100 comprising a client device 101 operated by a user 102 and configured for interacting through a network 103 with one or more distant server devices 104.

**Figure 2**, is a schematic illustration of such a client device 101. It may include a processor 201 connected via a bus 202 to at least one memory among a random access memory (RAM) 203, a read-only memory (ROM) 204, a non-volatile memory (NVM) 205 or a cache memory.

The client device 101 may further include a communication interface 206 which may be used to connect it to various forms of wireless networks, e.g., wide-area networks, WiFi networks, or mobile telephony networks. Alternatively, the client device 101 may connect to networks via wired network connections such as Ethernet.

The client device 101 may also include input/output means 207 providing interfaces to the user of the client device 101, such as one or more screens, loudspeakers, a mouse, tactile surfaces, a keyboard etc...

Such a client device may for example be a computer or a smartphone.

The server device 104 has the same kind of architecture and may include the same elements as the client device (301, ...).

The following paragraphs describe with more details the steps of a method according to the invention.
In a first step S1, the server device selects a set of mutually coprime integers (p₁,...,pₙ) as a base of the Residue Number System, with n an integer.
In a second step S2, the server device computes a RNS representation of the private key.
In a third step S3, the server device sends the computed RNS representation to the client device. After he receives it, the client device may use it to perform calculations using the private key without returning it back to its original form.
In a fourth step S4, the client device performs the cryptographic computations of the public key algorithm in said RNS base using said sent RNS representation of the private key. The results of such computations are also expressed in the RNS base selected by the server device in the first step.

By doing so, the performed computations do not manipulate at any time the cleartext value of the private key. Thus, an attacker could not retrieve the private key from his observations of the computations, neither directly by static analysis of the memory, nor by performing side channel analysis.

In order to use the result of the cryptographic computations, it will most likely be required to reverse the RNS transformation by expressing this result in a base known to the client device.

In such a case, in a first embodiment, the client device may send back the computations result to the server device and make it apply to the result the inverse operation of the RNS transformation performed in the second step S2. The server device may then send back the value of the result to the client device. By doing so, the result of the cryptographic computations is exposed to an attacker in a whitebox context but the private key is not.

In a second embodiment, the RNS base selected in the first step is transmitted by the server device to the client device and the client device is able to compute the expression in another base of the result of the cryptographic computations expressed in the RNS base.

In order to further increase the level of security of the method, the client device may perform additional countermeasures protecting the public key algorithm against side-channel and fault attacks. Such countermeasures are especially needed when the client device stores the RNS base, in order to prevent an attacker from gaining knowledge of the selected RNS base and then defeat the protection provided by the RNS transformation of the private key.

Particularly, the arithmetic operations performed in the RNS base may comprises a randomization of the inputs and/or the outputs of these arithmetic operations. Such a randomization is usually performed in order to protect an algorithm against side-channel analysis.

Such arithmetic operations may also include a detection of Fault attacks, for example by using redundancy techniques.

The cryptographic operations performed by the client device have at least one operand in addition to the private key. When the client device performs these operations in the RNS base, the operands of the operations shall also be expressed in the same RNS base. As a result, the method according to the invention may comprise an operand transformation step S4-0 performed before the fourth step S4 during which RNS representations of inputs of the cryptographic computations are computed. The cryptographic computations of the public key algorithm in the RNS base may then be performed using these RNS representations of their inputs.

In a first embodiment, these RNS representations of inputs of the cryptographic computations may be computed by the server device and transmitted to the client device. By doing so, the client device does not need to know the RNS base.

In a second embodiment, these RNS representations of inputs of said cryptographic computations are computed by the client device. For that, the client device may have knowledge of the RNS base. As discussed above, such a knowledge comes with the risk that an attacker may discover the RNS base. Thus, in such a case additional countermeasures have to be applied in order to keep the RNS base secret. Alternatively, the client device may compute such representations by using secure techniques configured for performing a reduction modulo an integer without revealing said integer. By doing so, the client device is able to compute the RNS representation of any value without knowing the RNS base, which guarantees that an attacker will not discover it, even in a whitebox context.

When the cryptographic operations are performed by the client device in the selected RNS base, these operations must be performed along each vector of the selected base. Since all these vectors of the base are coprime with each other, no carry has to be propagated from one vector to another.

As a result, the operations in the RNS may be performed separately along each vector independently from the operations performed along the other vectors of the same base. Consequently, for a given operation to be performed, it may be performed separately along each vector of said base in a random order.

The same operation may even be applied along several vectors of the selected base at the same time, in parallel.

According another aspect, the invention relates to a computer program product directly loadable into the memory of at least one computer, comprising software code instructions for performing the steps of the method described here above when said product is run on the computer.

The described solution enables to protect the private key during the execution of the cryptographic operations, even in a white box context, including against side-channel analysis. Since RNS representation computation is not very expensive and performing cryptographic computations in an RNS base does not induce a strong increase of the cost of the cryptographic computations, the computation time induced by such a method remains low compared to other countermeasures against whitebox attacks.

## Claims

1. A method for securely performing a public key algorithm comprising cryptographic computations using a private key,
said method being performed by a system (100) comprising a client device (101) and a server device (104) and comprising the steps of :
- selecting (S1), by said server device, a set of mutually coprime integers (p₁,... ,pₙ) as a base of a Residue Number System (RNS-base B), with n an integer,
- computing (S2), by said server device, a RNS representation of said private key, said RNS representation of an integer x in [0, P-1], with P the product of every elements of the base, being the list (x₁, ...xₙ) with xᵢ = x mod pᵢ, i being an integer in [1, n],
- sending (S3), by said server device, the computed RNS representation to the client device,
- performing (S4), by said client device, the cryptographic computations of the public key algorithm in said RNS base using said sent RNS representation .

2. The method of claim 1, wherein said client device performs additionnal countermeasures against side-channel and fault attacks to be applied to said public key algorithm.

3. The method of claim 1 or 2, wherein said public key algorithm is among : RSA encryption and signature schemes, ECDSA (Elliptic Curve Digital Signature Algorithm) signature scheme, EIGamal encryption and signature schemes.

4. The method of any one of claim 1 to 3, wherein said cryptographic computations performed by said client device are among: addition, multiplication, modular addition/multiplication, inversion, Montgomery multiplication.

5. The method of any one of claim 1 to 3, wherein said cryptographic computations performed by said client device are arithmetic operations to be executed by said public key algorithm.

6. The method of claim 5, wherein performing, by said client device, the arithmetic operations of the public key algorithm comprises a randomization of inputs and/or outputs of said arithmetic operations.

7. The method of claim 5 or 6, wherein performing, by said client device, the arithmetic operations of the public key algorithm comprises a detection of Fault attacks.

8. The method of any one of claim 5 to 7, wherein said arithmetic operations of the public key algorithm in said RNS base are performed separately along each vector of said base in a random order.

9. The method any one of claim 1 to 8, wherein RNS representations of inputs of said cryptographic computations are computed and wherein the cryptographic computations of the public key algorithm in said RNS base are performed using said RNS representations of their inputs.

10. The method of claim 9, wherein said RNS representations of inputs of said cryptographic computations are computed by the server device and transmitted to the client device.

11. The method of claim 9, wherein said RNS representations of inputs of said cryptographic computations are computed by the client device using secure techniques configured for performing a reduction modulo an integer without revealing said integer.

12. A computer program product directly loadable into the memory of at least one computer, comprising software code instructions for performing the steps of any one of claims 1 to 11, when said product is run on the computer.

13. A system (100) comprising a client device (101) and a server device (104) comprising each one a processor (201, 301) and an interface (207, 307) configured to perform the steps of any one of claims 1 to 11.
